## Europäisches Patentamt

## European Patent Office

## Office européen des brevets

(11) Veröffentlichungsnummer: **0 100 973**
**B1**

(12) # EUROPÄISCHE PATENTSCHRIFT

(45) Veröffentlichungstag der Patentschrift:
15.10.86

(51) Int. Cl.⁴: **F 15 B 13/043**

(21) Anmeldenummer: **83107471.1**

(22) Anmeldetag: **29.07.83**

(54) **Proportional arbeitendes Steurerventil für hydraulische Präzisionssteuerungen.**

(30) Priorität: **05.08.82 US 474859**

(43) Veröffentlichungstag der Anmeldung:
**22.02.84 Patentblatt 84/8**

(45) Bekanntmachung des Hinweises auf die Patenterteilung:
**15.10.86 Patentblatt 86/42**

(84) Benannte Vertragsstaaten:
**AT BE CH DE FR GB IT LI NL SE**

(56) Entgegenhaltungen:
**EP-A-0 017 868**
**EP-A-0 095 782**
**BE-A-694 157**
**DE-A-2 835 771**
**US-A-3 114 532**

**OELHYDRAULIK UND PNEUMATIK, Band 19, Nr. 2, Februar 1975, Seiten 83-85, Mainz, DE., D.G. FELDMANN: "Aufbau von Steuerungen in Blockbauweise"**
**OELHYDRAULIK UND PNEUMATIK, Band 20, Nr. 9, September 1976, Seiten 593-597, Mainz, DE., E. FÜHRER: "Proportionalmagnete als Stellglieder für Hydroventile"**
**"Ölhydraulik und Pneumatik", 21 (1977), Nr. 3, S. 138**

(73) Patentinhaber: **DEERE & COMPANY, 1 John Deere Road, Moline Illinois 61265 (US)**

(72) Erfinder: **Kumar, Viraraghaven Sampath, 613 Alpine Dr., Waterloo Iowa 50702 (US)**

(74) Vertreter: **Fricke, Joachim, Dr., Dr. R. Döring, Dr. J. Fricke, Patentanwälte Josephspitalstrasse 7, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein proportional arbeitendes, elektrohydraulisch, vorgesteuertes 2-Wege-Sitzventil für hydraulische Präzisionssteuerungen mit den Merkmalen des Oberbegriffs des Anspruuchs 1.

Ein solches Ventil ist aus der US-A-3114 532 bekannt. Bei dem bekannten Ventil erfolgt der Zulauf des Druckfluids an der umfänglichen Öffnung der Innenbohrung, während der Ablauf des Druckfluids in Richtung der Ventilachse erfolgt. Das erste Ventilglied ist als abgestufter Kolben ausgebildet dessen umfängliche Stufe in der Schließstellung des Ventils etwa mittig im Bereich des umfänglichen Fluideinlasses liegt. Die zwischen der Innenbohrung und dem verjüngten Bereich des ersten Ventilgliedes gebildete Ringkammer steht über einen mit einer Drosselstelle versehenen Kanal mit der Rückseite des ersten Ventilgliedes in Verbindung auf der eine ringförmige Steuerdruckkammer ausgebildet ist. Radial nach innen zu ist diese Steuerdruckkammer durch eine hülsenförmige Verlängerung des ersten Ventilgliedes begrenzt, welche hülsenförmige Verlängerung im Abstand vom ersten Ventilglied einen Abschnitt aus nicht magnetisierbarem Material aufweist, der in die elektromagnetische Spule der Betätigungseinrichtung hineinragt. Der Hülsenabschnitt des ersten Ventilgliedes nimmt in seinem Inneren den ankerförmigen Kolben der Betätigungseinrichtung auf, der seinerseits fest mit dem zweiten Ventilglied verbunden ist, welches eine axiale Bohrung in dem ersten Ventilglied normalerweise geschlossen hält. Der Schließdruck wird durch eine das zweite Ventilglied vorspannende Feder bestimmt, die sich auf einem mit dem hülsenförmigen Teil des ersten Ventilgliedes zusammenwirkenden rückwärtigen axial beweglichen Magentteil abstützt, der seinerseits ebenfalls in der gleichen Richtung unter Federvorspannung steht, wobei diese Vorspannfeder sich an einem gehäusefesten Teil abstützt. Eine Querbohrung sowie Spalte zwischen den relativ beweglichen Teilen sorgen dafür, daß die Steuerdruckkammer mit dem Bereich um das zweite Ventilglied in ständigem Druckausgleich steht. Bei geschlossenem Ventil wirkt der Zulaufdruck nur auf die Ringschulter zwischen den beiden Abschnitten des abgestuften ersten Ventilgliedes. Die Verbindung zwischen der Steuerdruckkammer und der durch das zweite Ventilglied gesteuerten Kanalmündung ist relativ kompliziert und störanfällig, so daß zwischen diesen Druckunterschiede auftreten können. In der Schließstellung ist der vom Zulauf herrührende auf die Rückseite des ersten Ventils wirkende Schließdruck relativ hoch. Dieser relativ hohe Druck muß zunächst abgebaut werden, bevor das erste Ventilglied bei öffnen des zweiten Ventilgliedes diesem folgen kann.

Es ist Aufgabe der Erfindung ein 2-Wege-Sitzventil mit den Merkmalen des Oberbegriffs des Anspruchs 1 so weiterzubilden, daß diese Schwierigkeiten vermieden werden und bei wesentlich einfacherem Aufbau eine höhere Ansprechempfindlichkeit und Steuergenauigkeit bei geringerer Störanfälligkeit erreicht wird.

Diese Aufgabe wird durch die kennzeichnenden Merkmale des Anspruchs 1 gelöst.

Bei dieser Anordnung wirkt der Zulaufdruck im wesentlichen gleichermaßen auf die freie Stirnseite und auf die Rückseite des ersten Ventilgliedes. In der Schließstellung dieses Ventils sind diese Drück weitgehend ausgeglichen. Die Schließkraft wird im wesentlichen durch die Vorspannfeder für das zweite Ventilglied bestimmt. Diese Vorspannkraft ist gemäß einer bevorzugten Ausführung nach Anspruch 2 von der Vorspannfeder, die über den Hülsenabschnitt auf das erste Ventilglied einwirkt, unabhängig. Damit ergibt sich eine wesentlich genauer einstellbare Federeinwirkung auf das zweite Ventilglied. Durch den ausgeglichenen Druck auf den beiden Stirnflächen des ersten Ventilgliedes kann bei Abheben des zweiten Ventilgliedes das eßte Ventilglied praktisch augenblicklich auf die veränderten Druckverhältnisse ansprechen und nahezu ohne merkliche Verzögerung der Bewegung des zweiten Ventilgliedes folgen. Es ergibt sich somit eine höhere Ansprechempfindlichkeit und eine höhere Steuergenauigkeit. Diese wird auch dadurch gefördert, daß die Steuerdruckkammer die von dem zweiten Ventilglied gesteuerte Kanalmündung unmittelbar umgibt. Dadurch ergibt sich auch eine geringere störanfälligkeit des Ventils. Hinzu kommt ein wesentlich einfacherer Aufbau, der auch zu einer wesentlich preiswerteren Herstellung führt.

Diese Vorteile addieren sich, wenn mehrere solche gleichartigen 2-Wege-Sitzventile zur Stellungsregelung eines einfach wirkenden oder doppelt wirkenden hydraulischen Motors eingesetzt werden, wie dies an sich aus der Zeitschrift "Ölhydraulik und Pneumatik", 21 (1977) Nr. 3, Seite 138 (4) bekannt ist.

Die Erfindung wird nachfolgend anhand schematischer Zeichnungen an einem Ausführungsbeispiel näher erläutert.

Es zeigen:

Figur 1 eine schematische Ansicht im senkrechten Schnitt durch das 2-Wege-Sitzventil gemäß der Erfindung, wobei beide Ventilglieder sich in ihrer Schließstellung befinden.

Figur 2 in gleicher Darstellung wie Fig. 1 das Ventil bei Anlegen eines Steuersignals an die elektromagnetische Betätigungseinrichtung.

Figur 3 in wiederum ähnlicher Darstellung wie Fig. 1 das Ventil, bei dem sich das erste Ventilglied in einer vorbestimmten Öffnungsstellung befindet.

Figur 4 in schematischer Darstellung die Verwendung von zwei derartigen 2-Wege-Sitzventilen zur Nachbildung eines proportional arbeitenden 3-Wege-Steuerventils und

Figur 5 ebenfalls in schematischer Darstellung die Verwendung von vier solchen 2-Wege-Sitzventilen zur Nachbildung eines proportional arbeitenden 4-Wege-Ventils.

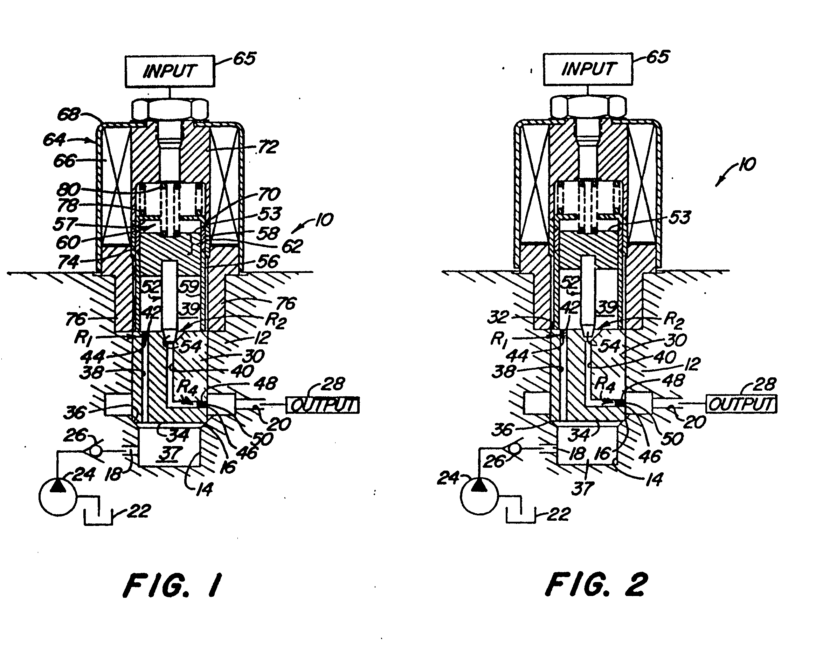

Gemäß den Figuren 1 bis 3 weist das proportional arbeitende elektrohydraulisch vorgesteuerte 2-Wege-Sitzventil 10 ein Gehäuse 12 mit einer Innenbohrung 14 auf. Diese weist im Bereich einer Stirnseite einen Ventilsitz 16 auf. Die Innenbohrung 14 steht in Verbindung mit einem Fluideinlaß 18 und einem Fluidauslaß 20. Der Fluideinlaß 18 steht über ein Rückschlagventil 26 mit einer Druckmittelpumpe 24 in Verbindung, die aus einem Vorratsbehälter 22 ansaugt. Der Fluidauslaß 20 steht mit einem äußeren Funktionsglied 28 in Verbindung. Hierbei kann es sich um einen oder mehrere hydraulische Zylinder oder hydraulische Motoren handeln, die zum Heben oder Senken z.B. eines an einer landwirtschaftlichen Maschine angebrachten Gerätes oder Werkzeuges dienen. Zwischen Fluideinlaß 18 und Fluidauslaß 20 ist in der Innenbohrung 14 ein erstes Ventilglied 30 angeordnet. Dieses weist eine obere oder rückseitige Stirnfläche 32 und eine untere oder freie Stirnfläche 34 auf. Die untere äußere Umfangskante 36 dieses Ventilgliedes wirkt mit dem Ventilsitz 16 zusammen. Die Größe der wirksamen Fläche der Stirnseite 34, auf die der Zulaufdruck einwirkt, ist im wesentlichen gleich der Größe der wirksamen Flächenausdehnung der Rückseite 32 des ersten Ventilgliedes. Auf diese Fläche wirkt der Steuerdruck, der in einer Steuerdruckkammer 39 wirksam ist. Die annähernd gleiche Größe dieser wirksamen Flächen führt bei geschlossenem Ventil zu einem hydraulischen Kraftausgleich bezüglich des ersten Ventilgliedes, wodurch Ansprechempfindlichkeit und Steuergenauigkeit erheblich begünstigt werden.

Das erste Ventilglied 30 unterteilt die Bohrung 14 in zwei in Abstand angeordnete Kammern, und zwar die Zuführungsoder Speisekammer 37 und eine Steuerkammer 39. Die Zuführungskammer 37 liegt unterhalb der Bodenfläche 34 des ersten Ventilgliedes 30, während die Steuerkammer 39 oberhalb der oberen Stirnfläche 32 angeordnet ist.

Innerhalb des ersten Ventilgliedes 30 ist ein erster Fluidkanal 38 und ein zweiter Fluidkanal 40 angeordnet. Der erste Kanal 38 erstreckt sich von der Oberseite 32 zur Bodenseite 34 und dient als Einschnürung oder Drossel $R_1$ zwischen beiden, um einen Druckabfall über das erste Ventilglied 30 zu erzeugen. Un einen noch besseren oder wünschenswerteren Druckabfall für unterschiedliche Druckventile zu erhalten, ist ein Stöpsel 42 vorgesehen, der eine Öffnung 44 von vorbestimmter Größe aufweist und der in den ersten Kanal 38 eingesetzt werden kann. In jedem Fall wird über das erste Ventilglied 30 ein Druckabfall geschaffen, wobei der höhere Druckwert allgemein auf der Bodenfläche 34 des Ventilgliedes wirksam ist.

Ein zweiter Fluidkanal 40 erstreckt sich von der oberen Fläche 32 des ersten Ventilgliedes 30 zu einer äußeren Umfangsstelle 46 am Ventilglied 30, die zwischen den beiden Flächen 32 und 34 liegt. Die äußere Stelle 46 steht ständig in Fluidverbindung mit den Fluidauslaß 20 unabhängig von der Stellung des ersten Ventilgliedes 30 innerhalb der Bohrung 14. Ein Stöpsel 48, der eine vorbestimmte Drosselöffnung 50 enthält, kann auch in den zweiten Kanal 40 eingesetzt werden, um dem gleichen Zweck wie der Stöpsel 42 zu dienen. Dieser Stöpsel erzeugt eine Drosselung $R_4$.

Das erste Ventilglied 30 ist über einen begrenzten Bereich durch den Fluiddruck zwischen einer Schließstellung, in der die äußere Umfangsfläche 36 in unteren Bereich auf den Ventilsitz 16 aufsitzt, und einer offenen Stellung bewegbar, in der die äußere Umfangsfläche 36 sich von Ventilsitz 16 in Abstand befindet.

Ein zweites Ventilglied 52, vorzugsweise von der gleichen Art wir das Ventilglied 30, weist eine Oberseite 53 in der Bohrung 14 auf, die von der Oberseite 32 des ersten Ventilgliedes 30 abgewandt ist. Das zweite Ventilglied 52 steht in Fluchtung mit den Eintritt des zweiten Kanals 40 und ist linear zwischen einer Schließstellung, in der die Fluidströmung durch den zweiten Kanal 40 gesperrt ist und einer Offenstellung nach Fig. 2 bewegbar, in welcher die Strömung durch den zweiten Kanal 40 freigegeben ist. Die Größe und üestalt der unteren Spitze 54 des zweiten Ventilgliedes 52 kann so gestaltet sein, daß eine Strömungseinschnürung $R_2$ eine Strömungskraft um die Spitze 54 erzeugt, um eine kontrollierte druckkompensierte Strömung durch das gesamte Steuerventil 10 zu erzeugen.

Das proportional arbeitende Steuerventil 10 unfaßt weiter eine Hülse 56, die in der Bohrung 14 angeordnet ist und mit ihrem unteren Rand die obere Stirnfläche 32 des ersten Ventilgliedes 30 berührt. Die Hülse 56 weist einen magnetisierbaren Endabschnitt 57, einen nicht magnetisierbaren hülsenförmigen Zwischenabschnitt 58 und einen magnetisierbaren hülsenförmigen oberen Abschnitt 59 auf. Der Endabschnitt 57 weist eine magnetisierbare geschlossene Bodenfläche auf und weist einen vorbestimmten Abstand von der oberen Stirnfläche 53 des zweiten Ventilgliedes 52 auf, so daß zwischen diesen beiden ein kleiner Arbeitsluftspalt 60 gebildet ist. Dieser kleine Arbeitsluftspalt bleibt relativ konstant durch alle Funktionsstellungen des Steuerventils 10. Der nicht magnetische hülsenförmige Abschnitt 58 umgibt den oberen Bereich 62 des zweiten Ventilgliedes 52, so daß der durch ein elektromagnetisches Element, wie Spule 64 erzeugte magnetische Fluß das zweite Ventilglied 52 linear nach oben bewegen kann, wenn das Element 64 durch ein Eingangssignal 65 beaufschlagt ist. Wie dies allgemein für den Fachmann bekannt ist wirkt das zweite Ventilglied 52 wenigstens mit seinem oberen Teil als Anker und wird durch den magnetischen Fluß nach oben gezogen, wenn Strom an die elektromagnetische Spule 64 angelegt wird.

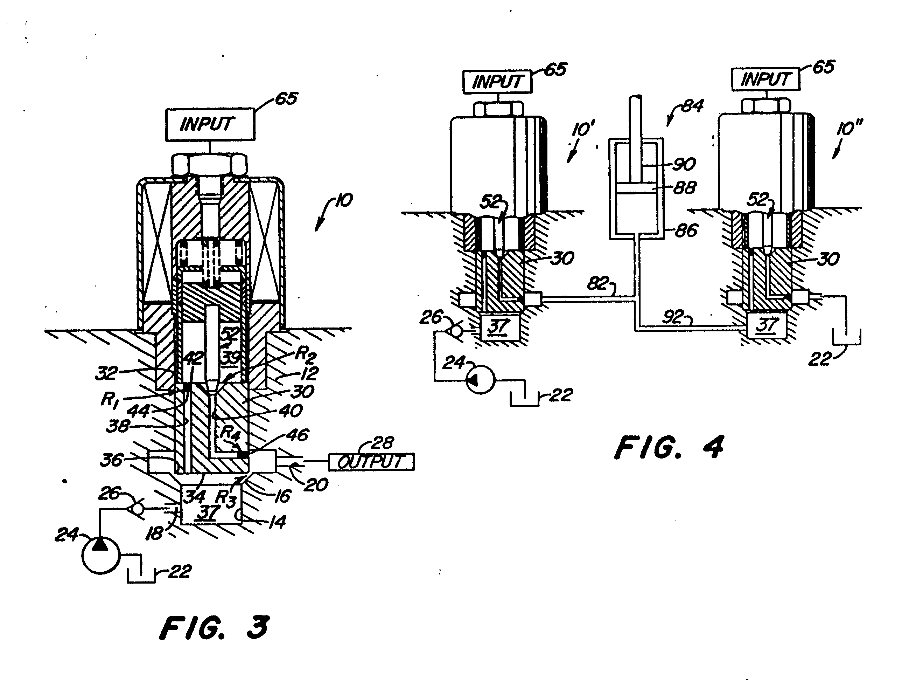

Die Spule 64 unfaßt eine Wicklung 6b, die durch eine Kappe 68 eingeschlossen ist. Die Wicklung 66 umgibt teilweise ein Tragglied 70, das aus einem nicht magnetischen Glied 74 besteht, das zwischen zwei magnetischen Elementen 72 und 76 eingeschlossen ist. Das nicht magnetische Glied 74 steht in radialer Richtung in Fluchtung mit dem nicht magnetisierbaren Abschnitt der Hülse 56. Damit kann der Magnetfluß eine Schleife von der Wicklung 66 über die magnetischen Glieder 76 und 59, den oberen Abschnitt 62 des zweiten Ventilgliedes 52, durch den Arbeitsluftspalt 60 und durch den magnetischen Bodenabschnitt 57 der Hülse 56 bilden. Durch Aufrechterhaltung eines in wesentlichen konstanten kleinen Arbeitsluftspaltes 60, den der Magnetfluß durchqueren muß, wird eine größere Kraft zur Verfügung gestellt, welche die Länge des Hubes des ersten Ventilgliedes 30 vergrößert. Dies führt zu einer vergrößerten Strömungskapazität zwischen Strömungseinlaß 18 und Strömungsauslaß 20, wie durch die Bezeichnung R$_3$ in Fig. 3 angedeutet ist.

Schließlich enthält das Steuerventil 10 zwei Federn 78 und 80 in der Bohrung 14. Die Feder 78 drückt die Hülse 56 nach unten gegen die Oberseite 32 des ersten Ventilgliedes, während die Feder 80 gegen die Oberfläche 53 des zweiten Ventilgliedes 52 drückt, um dieses ständig nach unten gegen das erste Ventilglied 30 und damit in die Schließstellung zu drücken. Beide Federn 78 und 80 tragen dazu bei, daß der Arbeitsluftspalt 60 im wesentlichen zu allen Zeiten unverändert bleibt. Zusätzlich dient die Feder 78 auch dazu, das erste Ventilglied 30 in die Schließstellung zurückzudrücken, sofern einmal ein Druckdifferential über das erste Ventilglied 30 entstanden ist und wieder abnimmt. Dadurch wird sichergestellt, daß das erste Ventilglied 30 nicht in der offenen oder teilweise offenen Stellung hängenbleibt.

Die Arbeitsweise des proportional arbeitenden Steuerventils 10 wird nachfolgend anhand der Fig. 1 beschrieben. In dieser befinden sich beide Ventilglieder 30 und 32 in ihrer unteren Schließstellung. Das unter Druck stehende Fluid von der Pumpe 24 füllt die Zuführungskammer 37, den ersten Kanal 38 und die Steuerkammer 39. Da kein Strömungsweg zwischen Strömungseinlaß 18 und Auslaß 20 besteht, liegt auch kein Druckabfall über das Ventilglied 30 vor. Dieses Gleichgewicht der Drücke, die auf das erste Ventilglied 30 wirken, zusammen mit der Kraft der Feder 78 stellt sicher, daß das erste Ventilglied auf dem Ventilsitz 16 aufsitzt und den Durchgang sperrt.

Un die Fluidströmung durch das Ventil zu ermöglichen, wird ein elektrisches Eingangssignal 65 angelegt, um das elektromagnetische Element 64 an Spannung zu legen. Die Wicklung 66 des Elementes 64 erzeugt dann einen Magnetfluß, der das zweite Ventilglied 52 nach oben zieht, so daß ein Strömungsweg durch den zweiten Kanal 40 nach Fig. 2 zum Auslaß geschaffen ist. Die Strecke, die das zweite Ventil 52 nach oben bewegt wird, steht in direkter Beziehung zu dem Betrag des Stromes, der den elektromagnetischen Element 64 zugeführt wird. Es sollte benerkt werden, daß der Strönungsweg von Strömungseinlaß 18 zun Strömungsauslaß 20 direkt erfolgt. Eine Umkehrströmung wird durch das Rückschlagventil 26 verhindert.

Wenn das Fluid aus der Steuerkammer 39 ausströmt, wird in Druckdifferential über das erste Ventil 30 erzeugt, so daß der Druck auf der Bodenfläche 4 größer als der Druck auf der oberen Stirnfläche 32 ist. Wenn diese Druckdifferenz die nach unten gerichtete Vorspannkraft der Feder 78 übersteigt, wird das erste Ventilglied 30 von dem Ventilsitz 16 nach Fig. 3 nach oben bewegt. Hierbei wird eine Fluidöffnung mit den Strömungswiderstand R$_3$ zwischen dem Strönungseinlaß 18 und dem Auslaß 20 geschaffen. Wenn das erste Ventilglied 30 sich nach oben bewegt, bewegt sich die Hülse 56 in der gleichen Richtung, so daß der Arbeitsluftspalt 60 in wesentlichen konstant bleibt. Die einzige mögliche Variation in der Dicke des Arbeitsluftspaltes 60 tritt auf, wenn die anfängliche Bewegung des zweiten Ventilgliedes 52 bei Beginn eines Steuervorganges einsetzt.

Bei dem tatsächlichen Betrieb bewegen sich das erste Ventilglied 30, das zweite Ventilglied 52 und die Hülse 56 nach oben und nach unten gleichzeitig, sobald ein Druckdifferential über das erste Ventilglied 30 entstanden ist. Die korrespondierende lineare Bewegung der beiden Ventilglieder 30 und 52 führt zu einer die Lage rückmeldenden Eigenschaft in dem proportional arbeitenden Steuerventil 10. Die Rückmeldung der Lage ist das Ergebnis der variablen Öffnung R$_2$, die an Eintritt des zweiten Kanals 40 gebildet wird. Sollte der Druck des eintretenden Fluids abfallen bewegt sich das erste Ventilglied 30 aufgrund des verminderten Druckes, der auf die Bodenfläche 34 wirksam ist, nach unten. Wenn das erste Ventilglied 30 sich nach unten bewegt, wird die Größe der Durchströmöffnung R$_3$ abnehmen, so daß das Austreten des Fluids aus der Zuführungskammer 37 gedrosselt wird. Gleichzeitig nimmt die Größe der veränderlichen Öffnung R$_2$ zu, so daß die auf die obere Stirnfläche 32 wirkende Druckkraft abnimmt. Nahezu gleichzeitig bewegt sich das erste Ventil 30 in eine Gleichgewichtsstellung. Eine solche Kompensationsbewegung wird als eine positive Rückführung bezeichnet und tritt auf, sobald das zweite Ventilglied 52 bewegt wird oder sobald der Druck über das proportional arbeitende Steuerventil 10 sich ändert.

Das proportional arbeitende Steuerventil 10 kann mit einen oder mehrerer gleicher Steuerventileinheiten kombiniert werden, um eine kompliziertere Steuereinrichtung aufzubauen. Man kann hierbei die Wirkung eines Dreiwege- oder eines Vierwegeventils erhalten.

In Fig. 4 sind zwei Steuerventile 10' und 10''

miteinander so verbunden, daß sie ein Dreiwegeventil bilden. Der Ausgang des Steuerventils 10' wird durch die Leitung 32 zu einen Funktionsglied 84 geführt, das hier als hydraulischer Zylinder 86 mit Kolben 88 und Kolbenstange 90 dargestellt ist, welch letztere mit einer Last verbunden ist. Die Leitung 82 ist außerdem mit der Zuführungskammer 37 des zweiten Steuerventils 10'' durch die Leitung 92 verbunden. In Fig. 4 sind beide Steuerventile 10' und 10'' so dargestellt, daß die beiden ersten und zweiten Ventilglieder 30 und 52 sich jeweils in der unteren Stellung befinden, so daß durch die Ventilglieder keine Fluidströmung möglich ist. Damit kann sich auch die Last nicht mehr bewegen und kann damit auch nicht den Kolben 88 bewegen, da das Fluid in dem hydraulischen Zylinder 86 eingesperrt ist. Dies entspricht der Neutralstellung der Ventilanordnung. Wenn das erste Ventilgtied 10' so betätigt wird, daß seine Ventilglieder 30 und 52 angehoben werden, so daß eine Fluidströmung durch das Ventil durch die Pumpe 24 her und die Leitung 82 in den Hydraulikzylinder 86 möglich ist, bewegt sich der Kolben 88 nach oben, wenn das zweite Ventil 10'' mit seinen Ventilen in der Schließstellung ist. Wenn das erste Steuerventil 10' mit seinen Ventilen 30 und 52 in der Schließstellung ist und das zweite Ventil 10'' mit den Ventilgliedern 30 und 52 geöffnet ist, kann das Fluid aus dem Hydraulikzylinder 56 ausströmen, so daß der Kolben 88 sich nach unten bewegt.

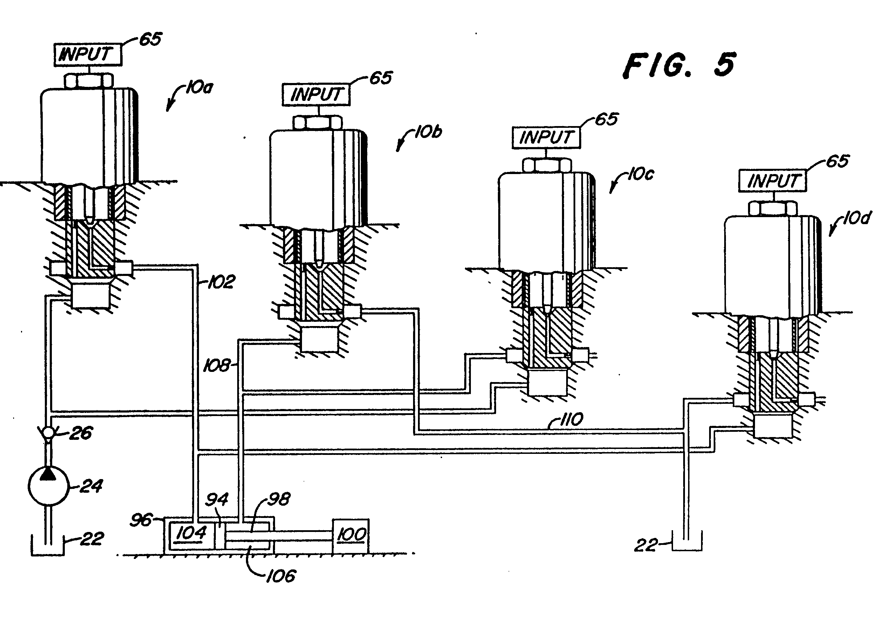

In Fig. 5 ist als Beispiel eine Vierwegssteuerventilanordnung gezeigt. Diese verwendet vier Steuerventile 10a bis 10d. Diese sind so angeordnet, daß sie einen doppelwirkenden Kolben 94 betätigen können. Der Kolben 94 ist in einen Hydraulikzylinder 86 angeordnet und über eine einzige Kolbenstange 98 mit einer Last 100 verbunden. In der dargestellten Stellung sind die Ventilglieder in dem ersten Ventil 10a offen, so daß unter Druck stehendes Fluid von der Pumpe 24 durch eine Leitung 102 in eine Kammer 104 strömen kann, die auf der linken Seite des Kolbens 94 in der Figur liegt. Die Ventilglieder des zweiten Ventils 10b sind offen, so daß Fluid in eine Kanner 106 auf der rechten Seite des Kolbens 94 durch eine Leitung 108 und durch eine Rücklaufleitung 110 zun Vorratsbehälter 22 ablaufen kann. Die Ventilglieder innerhalb der Ventile 10c und 10d bleiben bei diesem Arbeitszyklusabschnitt geschlossen. Beide öffnen jedoch, wenn die Ventile 10a und 10b geschlossen werden, so daß der Kolben 94 zurück nach links bewegt werden kann. Das Vierwegesteuerventil weist vier Betriebsarten auf. In der ersten oder neutralen Stellung befinden sich alle Ventilglieder in den vier Ventilen 10a bis 10d in der Schließstellung. In der zweiten Betätigungsmöglichkeit sind die Ventilglieder in den Ventilen 10a und 10b offen und die Ventilglieder in den beiden restlichen Ventilen 10c und 10d geschlossen, so daß der Kolben 94 nach rechts bewegt wird. In der dritten Betriebsweise sind die Ventilglieder in dem Ventil 10a, 10b geschlossen und die Ventilglieder in den restlichen beiden Ventilen 10c und 10d offen, so daß der Kolben 94 nach links bewegt wird. In der vierten oder frei schwimmenden Betriebsweise sind die Ventilglieder in den Ventilen 10a und 10c geschlossen und die Ventilglieder in den beiden anderen Ventilen 10b und 10d offen. Dadurch kann der Kolben sich in jeder Richtung in Abhängigkeit von der Druckdifferenz über den Kolben 94 bewegen.

Es sollte bemerkt werden, daß verschiedene Kombinationen und Anordnungen anderer Art vorgesehen werden können, bei denen eine Mehrzahl von proportional arbeitenden Steuerventilen 10 nach der vorliegenden Erfindung konbiniert werden. Auf diese Weise lassen sich viele alternative Ventilanordnungen verwirklichen.

**Patentansprüche**

1. Proportional arbeitendes, elektrohydraulisch vorgesteuertes Zwei-Wege-Sitzventil für hydraulische Präzisionssteuerungen, bestehend aus einem Gehäuse (12) mit Innenbohrung (14), das einen Fluideinlaß (18) und einen Fluidauslaß (20) aufweist, von denen der eine einer Stirnseite und der andere einem Umfangsbereich der Innenbohrung (14) zugeordnet ist; aus einem ersten Ventilglied (30), das in der Innenbohrung (14) zwischen einer im Zusammenwirken mit einem Ventilsitz (36) am Ende der Innenbohrung (14) den Fluideinlaß (18) und den Fluidauslaß (20) trennenden Endstellung und in diese verbindende variable Stellungen bewegbar ist; einer Steuerdruckkammer (39) auf der Rückseite (32) des ersten Ventilgliedes (30), die über innere Kanäle (38, 40) des ersten Ventilgliedes (30) mit dessen vorderer Stirnseite (34) einerseits bzw. dem Umfangsbereich in Höhe der umfangsseitigen Fluidöffnung (20) andererseits in Verbindung steht; aus einem zweiten Ventilglied (52), das in axialer Fluchtung mit der rückseitigen Mündung des mit dem Fluidauslaß (20) in Verbindung stehenden Kanals (40) des ersten Ventilgliedes (30) zwischen einer diese Mündung sperrenden und einer diese Mündung freigebenden Stellung beweglich angeordnet ist; und aus einer elektromagnetischen, zum Bewegen des zweiten Ventilgliedes (52) in dessen Freigabestellung dienenen Betätigungseinrichtung (64), welche einen vom ersten Ventilglied (30) abwandten oberen Bereich (62) des zweiten Ventilgliedes (52) als Anker aufweist, dessen Stirnfläche (53) einen Arbeitsluftspalt (60) mit der axial gegenüberliegenden Stirnfläche eines weiteren, axial beweglichen magnetisierbaren Teils (57) bildet, der durch das erste Ventilglied (30) über einen hülsenförmigen Abschnitt (56) axial mitbewegbar ist, welcher zwischen zwei magnetisierbaren Bereichen (59, 57) einstückig einen Längenbereich (59) aus nicht magnetisierbarem Material aufweist, der den an den Arbeitsluftspalt (60) angrenzenden oberen Bereich (62) des zweiten Ventilgliedes (52) umgibt, wobei der hülsenförmige Abschnitt (56) und das zweite Ventilglied (52) in richtung auf die Sperrstellung der beiden Ventilglieder (30, 52) durch Federn (78, 80) vorgespannt sind, und wobei die Bewegung des zweiten Ventilgliedes (52) eine Druckdifferenz zwischen der Steuerdruckkammer (39) und der Einlaßkammer (37) erzeugt, derart, daß das in Öffnungsrichtung durch den Zulaufdruck und in Schließrichtung durch den Steuerdruck in der Steuerdruckkammer (39) bewegbare erste Ventilglied (30) von seinem Ventilsitz (36) abhebt, dadurch <u>gekennzeichnet</u>, daß die eine Stirnfläche (34) des ersten Ventilgliedes (30) ständig dem Zulaufdruck (37) ausgesetzt ist und eine wirksame Flächenausdehnung im wesentlichen gleich der Flächenausdehnung der den Steuerdruck in der Steuerdruckkammer (39) ausgesetzten Rückseite (32) des ersten Ventilgliedes (30) aufweist, und daß die das zweite Ventilglied (52) unmittelbar umgebende Steuerdruckkammer (39) von dem Hülsenabschnitt (56) umschlossen ist, der mit dem den Arbeitsspalt (60) begrenzenden Teil (57) einstückig ausgebildet und mit seinem offenen Ende durch die Vorspannfeder (38) ständig gegen die Rückseite des ersten Ventilgliedes (30) angedrückt ist, derart, daß sich unter Zusammenwirken der beiden Federn (78, 80) die beiden Ventilglieder (30, 52) unter Konstanthaltung des Arbeitsluftspaltes (60) praktisch als Einheit bewegen.

2. Sitzventil nach Anspruch 1, dadurch <u>gekennzeichnet</u>, daß die das zweite Ventilglied (52) vorspannende Feder (80) unabhängig von der auf den Hülsenabschnitt (56) einwirkenden Feder (78) an einem gehäusefesten Teil (72) abgestützt ist.

## Claims

1. Proportionally operating electrohydraulically pre-controlled two-way seat valve for hydraulic precision control systems, consisting of a housing (12) with an internal bore (14) having a fluid inlet (18) and a fluid outlet (20), one of which is associated with a front end and the other with a circumferential zone of the internalbore (14); a first valve element (30) movable in the internal bore (14) betwevn an and position separating the fluid inlet (70) and the fluid outlet (20) in cooperation with a valve seat (36) at the and of the internal bore (14) and variable positions connecting the inlet and outlet; a control pressure chamber (39) at the rear face (32) of the first valve element (30) and which is in conjunication through internal ducts (38, 40) of the first valve element (30) with its front end face (34), on the one hand, and the circumferential zone, respectively, at the level of the fluid opening (20) at the circumference, on the other hand; a second valve element (52) arranged to be movable in axial alignment with the rear orifice of the duct (40) in communication in the first valve element (30) with the fluid outlet (20) between a position blocking this orifice and a position clearing this orifice; and an electromagnetic actuating device (64) serving to move the second valve element (52) into its clearing position, the actuating device having an upper zone (62) of the second valve element (52) remote from the first valve element (30) as an armature whose end face (53) forms a working air gap (60) with the axially opposite end face of another axially movable magnetizable part (57) which can be moved axially at the same time by the first valve element (30) by way of a sleeve-shaped portion (56) having in one piece between two magnetizable zones (59, 57) a zone (58) of its length of non-magnetizable material surrounding the upper zone (62) of tha second valve element (52) adjoining the working air gap (60), the sleeve-shaped portion (56) and the second valve element (52) being biased towards the blocking position of the two valve elements (30, 52) by springs (78 80) and the movement of the second valve element (52) producing a pressure difference between the control pressure chamber (39) and the inlet chamber (37) in such manner that the first valve element (30) movable in the opening direction by the faed pressure and in the closing direction by the control pressure in the control pressure chamber (39) lifts away from its seat (36), characterised in that the one end face (34) of the first valve element (30) is constantly exposed to the feed pressure (37) and has an effective surface area substantially equal to the surface area of the rear face (32) of the first valve element (30) exposed to the control pressure in the control pressure chamber (39), and the control pressure chamber (39) immediately surrounding the second valve element (52) is enclosed by the sleeve portion (56), which is formed in one piece with the part (57) defining the working air gap (60) and is pressed constantly at its open and against the rear face of the first valve element (30) by the biasing spring (38) in such manner that, with the cooperation of the two springs (78, 80), the two valve elements (30, 52) move practically speaking as one unit, keeping the working air gap (60) constant.

2. Seat valve according to claim 1, characterised in that the spring (80) biasing the second valve element (52) is supported on a part (72) fast with the housing independently of the spring (78) acting on the sleeve portion (56).

## Revendications

1.- Soupape à siège à deux voies à commande-pilote hydroélectrique à mode de fonctionnement proportionnel pour commandes hydrauliques de précision, comprenant un corps (12) pourvu d'un alésage intérieur (14) qui comporte une entrée de fluide (18) et une sortie de fluide (20) conjuguées l'une à une face frontale et l'autre à une zone périphérique de l'alésage intérieur (14); un premier élément obturateur (30) qui peut se déplacer dans l'alésage intérieur (14) entre une première position terminale séparant l'entrée de fluide (18) et la sortie de fluide (20) en coopération avec un siège de soupape (36) situé à l'extrémité de l'alésage intérieur (14) et des positions variables qui les mettent en communication, une chambre de pression de commande (39) du côté de la face postérieure (32) du premier élément obturateur (30) qui est en liaison par des canaux intérieurs (38, 40) du premier élément obturateur (30) avec sa face frontale antérieure (34) d'une part, respectivement avec la zone périphérique située au niveau de l'orifice de sortie de fluide (20) situé à la périphérie d'autre part; un second élément obturateur (52) disposé en alignement axial avec l'embouchure postérieure du canal (40) du premier élément obturateur (30) qui est en liaison avec la sortie de fluide (20), de façon à pouvoir se déplacer entre une position fermant cette embouchure et une position dégageant cette embouchure; et un dispositif d'actionnement (64) électromagnétique, servant à amener le second élément obturateur (52) dans sa position de dégagement qui comporte une zone supérieure (62) du second élément obturateur (52), opposée au premier élément obturateur (30), jouant le rôle d'un induit, dont la surface frontale (53) forme un entrefer de travail (60) avec la face frontale axialement opposée d'une autre section (57) aimantable mobile axialement pouvant être entraînée axialement par le premier élément obturateur (30) par l'intermédiaire d'une section (56) en forme de douille, qui comporte entre deux zones de sections aimantables (59, 57), d'un seul tenant, un tronçon (58) en matière non-aimantable qui entoure la zone supérieure (62) du second élément obturateur (52) contiguë à l'entrefer de travail (60), la section en forme de douille (56) et le second élément obturateur (52) étant précontraints vers la position de fermeture des deux éléments obturateurs (30, 52) par des ressorts (78, 80), et le mouvement du second élément obturateur (52) produisant une différence de pression entre la chambre de pression de commande (39) et la chambre d'admission (37) de telle façon que le premier élément obturateur (30) pouvant se déplacer dans le sens d'ouverture sous l'effet de la pression d'alimentation et dans le sens de fermeture sous l'effet de la pression de commande régnant dans la chambre de pression de commande (39) se soulève de son siège de soupape, caractérisée en ce que l'une des faces frontales, (34), du premier élément obturateur (30) est soumise en permanence à la pression d'admission (37) et présente une surface active (efficace) d'aire sensiblement égale à l'aire de la surface de la face postérieure (32) du premier élément obturateur (30) soumise à la pression de commande régnant dans la chambre de pression de commande (39), et en ce que la chambre de pression de commande (39) entourant directement le second élément obturateur (52) est embrassée par la section en forme de douille (56) formée d'un seul tenant avec la section (57) délimitant l'entrefer de travail (60) et appuyée constamment par le ressort de précontrainte (38) contre la face postérieure du premier élément obturateur (30), de telle façon qu'avec la coopération des deux ressorts (78, 80), les deux éléments obturateurs (30, 52) se déplacent pratiquement en bloc, l'entrefer de travail (60) restant pratiquement constant.

2.- Soupape à siège selon la revendication 1, caractérisée en ce que le ressort (80) précontraignant le second élément obturateur (52) s'appuie sur un élément (72) fixé par rapport au corps, indépendamment du ressort (78) agissant sur la section en forme de douille (56).

**FIG. 1**

**FIG. 2**

FIG. 4

FIG. 3

FIG. 5